(19) Europäisches Patentamt
European Patent Office
Office européen des brevets

(11) Veröffentlichungsnummer: **0 304 993 B1**

## (12) EUROPÄISCHE PATENTSCHRIFT

(45) Veröffentlichungstag der Patentschrift:
30.10.91 Patentblatt 91/44

(51) Int. Cl.$^5$: **G02B 6/42**, G01M 11/00

(21) Anmeldenummer: 88201748.6

(22) Anmeldetag: 16.08.88

(54) **Koppelanordnung zur Führung eines durch ein Ende eines Lichtwellenleiters (LWL) gesendeten Lichtstrahls auf die lichtempfindliche Fläche einer Photodiode eines Messgerätes.**

(30) Priorität: 22.08.87 DE 3728077

(43) Veröffentlichungstag der Anmeldung:
01.03.89 Patentblatt 89/09

(45) Bekanntmachung des Hinweises auf die
Patenterteilung:
30.10.91 Patentblatt 91/44

(84) Benannte Vertragsstaaten:
DE FR GB IT

(56) Entgegenhaltungen:
US-A- 4 167 746
HEWLETT-PACKARD JOURNAL, Februar
1987, Seiten 22-27; H. HUNING et al.:
"Precision optical heads for 850 to 1700 and
450 to 1020 nanometers"
APPLIED OPTICS, Band 26, Nr. 7, 1. April 1987,
Seiten 1170-1174; R.L. GALLAWA et al.:
"Calibration of optical fiber power meters: the
effect of connectors"

(73) Patentinhaber: Philips Patentverwaltung
GmbH
Wendenstrasse 35 Postfach 10 51 49
W-2000 Hamburg 1 (DE)
(84) Benannte Vertragsstaaten:
DE
Patentinhaber: N.V. Philips'
Gloeilampenfabrieken
Groenewoudseweg 1
NL-5621 BA Eindhoven (NL)
(84) Benannte Vertragsstaaten:
FR GB IT

(72) Erfinder: Heckmann, Siegfried, Dr.-Ing.
Teutonenstrasse 7
W-5600 Wuppertal 1 (DE)
Erfinder: Rybach, Johannes, Dr. rer. nat.
Forellenweg 39
W-4018 Langenfeld (DE)

(74) Vertreter: Koch, Ingo, Dr.-Ing. et al
Philips Patentverwaltung GmbH
Wendenstrasse 35 Postfach 10 51 49
W-2000 Hamburg 1 (DE)

## Beschreibung

Die Erfindung bezieht sich auf eine Koppelanordnung zur Führung eines durch ein Ende eines Lichtwellenleiters (LWL) gesendeten Lichtstrahls auf die lichtempfindliche Fläche einer Photodiode eines Meßgerätes, insbesondere eines optischen Leistungsmessers, mit einer der Endfläche des LWL zugeordneten absorbierenden Blende, deren Blendenöffnung sich zu der lichtempfindlichen Fläche der Photodiode hin konisch erweitert und welche an ihrer der Endfläche des LWL zugewandten engsten Stelle einen Durchmesser aufweist, welcher geringfügig größer als der Durchmesser der Lichtaustritttsfläche des LWL ist.

Insbesondere an optische Leistungsmesser, welche als Meßgeräte universell verwendbar sein sollen, müssen eine Vielzahl verschiedenartiger Lichtwellenleiter (Einmoden-, Mehrmoden-, Dickkernfasern u.s.w.) angeschlossen werden können. Im allgemeinen sind die Enden der LWL in Steckerhülsen gehalten, deren Formen und Abmessungen je nach Bauart eines Steckers vielfältig verschieden sind. Die mechanische Anpassung der unterschiedlichen LWL-Anschlußelemente an die einer Photodiode gegenüberliegende Aufnahme des Meßgeräts erfolgt durch auswechselbare Adapter.

Durch Applied Optics, Vol. 26, Seiten 1170-1174 ist das Problem bekannt, daß sich Interreflexionen zwischen der reflektierenden Oberfläche der Photodiode einerseits und den Stirnflächen der LWL-Anschlußelemente andererseits bei den verschiedenen Bauarten merkbar unterschiedlich stark auswirken und erhebliche Meßfehler verursachen können. Der Anteil des Lichts, welcher infolge der Interreflexionen zusätzlich in die Photodiode gelangt, ist deshalb für die unterschiedlichen Bauarten von Steckverbindern verschieden, weil deren zu den Photodioden gerichtete Stirnflächen natürlich unterschiedlich stark reflektieren. Deshalb muß man versuchen, Interreflexionen nach Möglichkeit zu verhindern oder jedenfalls auf ein Minimum zu unterdrücken.

Bei einer durch Hewlett-Packard Journal 1987, Seiten 26 und 27 bekannten Anordnung der eingangs genannten Art ist über das Ende des in einer Steckerhülse geführten LWL ein Adapter geschoben, welcher stirnseitig vor der Endfläche des LWL eine Lochblendenscheibe mit sich auf einem Teilbereich konisch erweiternder Blendenöffnung (300 µm) aufweist. Das austretende Licht wird über eine Linse auf eine zur Stirnfläche des LWL geneigte Fläche einer Photodiode gerichtet. Diese Anordnung ist recht aufwendig. Eine Linse verursacht zusätzliche Reflexionen.

Der Erfindung liegt die Aufgabe zugrunde, die Anordnung der eingangs genannten Art derart zu gestalten, daß sie bei einfacherem Aufbau dennoch weitgehend interreflexionsfrei ist.

Die Lösung gelingt dadurch, daß der Lichtstrahl unmittelbar auf die lichtempfindliche Fläche der Photodiode gerichtet ist und, daß der Öffnungswinkel β der konischen Innenfläche der Blende größer als 2 arc tan $\alpha_{max}$ ist, wobei tan $\alpha_{max}$ die maximal zulässige numerische Apertur (NA) eines anzuschließenden LWL für das Meßgerät ist.

Leider läßt sich der Idealfall, nämlich die reflektierenden Flächen der LWL-Anschlußelemente bis auf den Kernbereich des LWL vollständig durch eine vollkommen reflexionsfreie Schicht abzudecken, nicht verwirklichen. Einerseits muß der Durchmesser d der Blendenöffnung mindestens so groß wie der Durchmesser $d_{max}$ des Kerns des gemäß der Gerätespezifikation "dicksten" LWL sein. Darüberhinaus muß auch berücksichtigt werden, daß die LWL-Achse toleranzbedingt einen Mittenversatz zur Mittelachse der Photodiode aufweisen kann. Um diesen Mittenversatz muß der Durchmesser d zusätzlich größer sein. Eine weitere zusätzliche Vergrößerung der Blendenöffnung ist dann erforderlich, wenn die Blende nicht unmittelbar an der Stirnfläche des LWL anliegt. In der Praxis können Abstände bis zu 10 µm unvermeidbar sein. Wenn der Durchmesser $b_{max}$ kleiner als das 20-fache des Manteldurchmessers des LWL gewählt wird, ergeben sich tolerierbar kleine Interreflexionen.

Es wurde erkannt, daß die Auswirkung unvermeidbarer Restreflexionen dann besonders gering ist, wenn der Abstand der LWL-Stirnfläche von der lichtempfindlichen Fläche der Photodiode groß ist. Der Abstand a sollte vorzugsweise im Bereich 5 $R_p \geq$ a $\geq 1{,}7 R_p$ gewählt werden, wobei $R_p$ der Außenradius der lichtempfindlichen Fläche der Photodiode ist.

Eine besonders vorteilhafte Lösung ist dadurch gekennzeichnet, daß der Abstand a wie folgt gewählt ist:

$$a = \frac{R_p - R_{kmax}\,1{,}5}{\tan \alpha_{max}} \cdot \rho$$

wobei $r_{kmax}$ der maximale Kernradius eines anzuschließenden LWL gemäß Spezifikation des Meßgerätes und ρ ein dimensionsloser Faktor im Bereich 1 0,8 ist, und daß der Durchmesser d im Bereich 7 $R_{kmax}$ ≥ d ≥ 2,5 $R_{kmax}$ liegt. Bei dieser Dimensionierung ist der Abstand a so groß gewählt, daß auch bei den gemäß der Gerätespezifikation im ungünstigsten Fall anzuschließenden LWL mit der größtzulässigen Apertur (tan α) und dem größtzulässigen Kerndurchmesser ($d_{kmax}$) die abgegebene Strahlung mit einem nur geringen Sicherheitsabstand die lichtempfindliche Fläche der Photodiode (Radius $R_p$) nicht überschreitet, so daß also das Licht voll erfaßt wird.

Die Blende sollte sich über mindestens 20% des Abstandes zwischen LWL und Photodiode erstrecken. Vorteilhaft ist gemäß einer bevorzugten Ausführungsform der Erfindung vorgesehen, daß der Blendenkegel sich über mindestens 40% des Abstandes a von der Minimalöffnung der Blende bis zur Photodiode erstreckt.

Eine absorbierende Oberfläche (z.B. schwarze Schicht) ist nicht vollkommen reflexionsfrei. Die geneigten absorbierend beschichteten inneren Mantelflächen des Kegels verursachen aber Mehrfachabsorptionen, so daß schließlich auf die Photodiode nur noch ein verschwindend kleiner Rest gelangt.

Wegen dieser Auswirkung geneigter Flächen sollte der Kegelbereich soweit zur Photodiode geführt werden, wie es konstruktiv möglich ist. Der Kegelwinkel $\beta$ sollte höchstens doppelt so groß, vorzugsweise nur geringfügig (bis zu 10%) größer sein, als der Winkel des Lichtaustrittskegels des LWL mit der größtzulässigen numerischen Apertur.

An ein Meßgerät können im wesentlichen alle gebräuchlichen LWL angeschlossen werden, wenn für die Bemessung des Abstandes a ein Wert $\tan \alpha_{max}$ von 0,3 bis 0,35 zugrundegelegt wird. Für ein Universalmeßgerät sind Werte von a zwischen 2,5 und 3 mm bei Verwendung einer Photodiode mit einem Radius $R_p = 1$ mm vorteilhaft.

Bevorzugt wird eine konstruktive Lösung, bei welcher die Blende fester Bestandteil des Meßgerätes ist.

Es ist insgesamt aufwendiger, an jeden Adapter eine Blende vorzusehen, die dann auch nicht gegen Beschädigung gesichert ist. Allerdings sind solche Lösungen dann erforderlich, wenn ein Meßgerät verwendet werden soll, welches an sich keine erfindungsgemäße Blende aufweist.

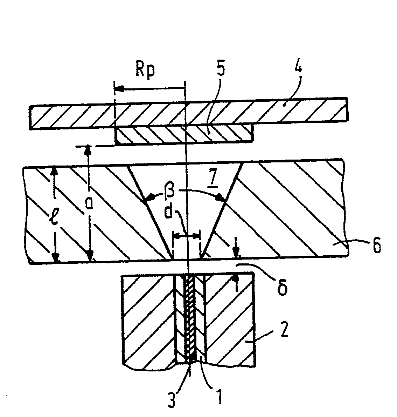

Die Erfindung wird anhand der Beschreibung eines in der Zeichnung schematisch dargestellten Ausführungsbeispiels näher erläutert.

Die Figur zeigt im Schnitt die für die Ankopplung wesentlichen Elemente.

Ein Lichtwellenleiter 1 ist in einer Steckerhülse 2 gehalten. Die Leistung des aus seinem Kern 3 austretenden Lichts soll gemessen werden. Dazu dient ein optischer Leistungsmesser, von welchem nur eine Photodiode 4 mit dem lichtempfindlichen Bereich 5 und die Lochblende 6 dargestellt sind. Die Steckerhülse 2 ist in einer nicht dargestellten Aufnahme des optischen Leistungsmessers gegebenenfalls über einen Adapter derart zu halten, daß die Mittellinie des Kerns 3 des LWL 1 möglichst genau zur durch die Mitte der lichtempfindlichen Fläche 5 verlaufenden und mit der Mittellinie der kegligen Blendenöffnung 7 identischen optischen Achse des optischen Leistungsmessers koaxial ausgerichtet ist. Ein toleranzbedingter unvermeidbarer Mittenversatz soll möglichst klein sein.

Bei einem gemäß Spezifikation für LWL mit einem maximalen Kerndurchmesser $d_{kmax} = 160$ μm und einer maximalen numerischen Apertur $\tan \alpha_{max} = 0,35$ vorgesehenen optischen Leistungsmesser, dessen Photodiode eine lichtempfindliche Fläche mit einem Durchmesser $2 R_p = 2$ mm hatte, wurden für die in der Figur angegebenen Abmessungen folgende Werte gewählt:

a = 2,7 mm
l = 1,3 mm
$\beta = 41°$
$\delta \approx 0$ mm
d = 0,5 mm

Die Interreflexionen waren bei diesem erfindungsgemäß gestalteten Gerät so klein, daß dadurch bedingte Einflüsse im Rahmen der Meßgenauigkeit nicht festgestellt werden konnten, obgleich der minimale Blendendurchmesser d sehr viel größer als der theoretisch optimale Wert $d_{kmax} = 0,16$ mm war.

## Patentansprüche

1. Koppelanordnung zur Führung eines durch ein Ende eines Lichtwellenleiters (1) (LWL) gesendeten Lichtstrahls auf die lichtempfindliche Fläche (5) einer Photodiode (4) eines Meßgerätes, insbesondere eines optischen Leistungsmessers, mit einer der Endfläche des LWL zugeordneten absorbierenden Blende (6), deren Blendenöffnung (7) sich zu der lichtempfindlichen Fläche der Photodiode hin konisch erweitert und welche an ihrer der Endfläche des LWL zugewandten engsten Stelle einen Durchmesser (d) aufweist, welcher geringfügig größer als der Durchmesser der Lichtaustrittsfläche des LWL ist, dadurch gekennzeichnet, daß der Lichtstrahl unmittelbar auf die lichtempfindliche Fläche der Photodiode gerichtet ist und, daß der Öffnungswinkel $\beta$ der konischen Innenfläche der Blende größer als $2 \text{ arc tan } \alpha_{max}$ ist, wobei $\tan \alpha_{max}$ die maximal zulässige numerische Apertur (NA) eines anzuschließenden LWL für das Meßgerät ist.

2. Koppelanordnung nach Anspruch 1 dadurch gekennzeichnet, daß der Abstand a der Blendenöffnung, gemessen von der Stelle ihres engsten Durchmessers d bis zur Oberfläche der lichtempfindlichen Schicht der Photodiode im Bereich 5 $Rp \geq a \geq 1,7 R_p$ gewählt ist, wobei $R_p$ der Außenradius der lichtempfindlichen Fläche der Photodiode ist.

3. Koppelanordnung nach Anspruch 1 oder 2, dadurch gekennzeichnet, daß der Abstand a wie folgt gewählt ist:

$$a = \frac{R_p - 1,5 R_{kmax}}{\tan \alpha_{max}} \cdot \rho$$

wobei $R_{kmax}$ der maximale Kernradius eines anzuschließenden LWL gemäß Spezifikation des Meßgerätes und $\rho$ ein dimensionsloser Faktor im Bereich $1 \geq \rho \geq 0,8$ ist, und daß der engste Durchmesser der Blendeöffnung d im Bereich $7 R_{kmax} \geq d \geq 2,5 R_{kmax}$ liegt.

4. Koppelanordnung nach einem der Ansprüche 1 bis 3, dadurch gekennzeichnet, daß der Kegelwinkel β der Blendenöffnung einen Wert im Bereich 2,2 $\alpha_{max} \geq \beta \geq 2\alpha_{max}$ hat.

5. Anordnung nach einem der Ansprüche 1 bis 4, dadurch gekennzeichnet, daß der Blendenkegel sich über mindestens 40% des Abstandes a von der Minimalöffnung der Blende bis zur Photodiode erstreckt.

6. Anordnung nach einem der Ansprüche 1 bis 5, dadurch gekennzeichnet, daß das Meßgerät für einen Wert tan $\alpha_{max}$ = 0,3 – 0,35 bemessen ist.

7. Anordnung nach einem der Ansprüche 1 bis 6, dadurch gekennzeichnet, daß der Abstand a = 2,5 bis 3 mm beträgt.

8. Anordnung nach einem der Ansprüche 1 bis 7, dadurch gekennzeichnet, daß die Blende fester Bestandteil des Meßgerätes ist.

9. Anordnung nach einem der Ansprüche 1 bis 8, dadurch gekennzeichnet, daß die Blende Bestandteil eines Aufnahmeadapters für in Stecker gefaßte LWL ist.

10. Anordnung nach einem der Ansprüche 1 bis 9, dadurch gekennzeichnet, daß der Abstand zwischen der Blende und der Endfläche des LWL kleiner als 10 μm ist.


## Claims

1. A coupling device for guiding a light beam sent through an end portion of an optical waveguide (1) to the light-sensitive surface (5) of a photodiode (4) of a measuring instrument, in particular an optical power meter, comprising an absorbing aperture plate (6) associated with the end face of the optical waveguide, and having an aperture (7) witch widens conically towards the light-sensitive face of the photodiode, the aperture plate facing the end face of the optical waveguide with its side where the diameter (d) of said aperture is smallest but slightly larger than the diameter of said end face of the optical waveguide, characterized in that the light beam is directed straight to the light-sensitive surface of the photodiode, and the angular aperture β of the conical inner surface of the aperture plate is larger than 2 arc tan $\alpha_{max}$, tan $\alpha_{max}$ being the maximum permissible numerical aperture (NA) of an optical waveguide to be connected for the measuring instrument.

2. A coupling device as claimed in Claim 1, characterized in that the distance a between the aperture, at the location of its smallest diameter d, and the surface of the light-sensitive layer of the photodiode is selected in the range from $5 R_p \geq a \geq 1.7 R_p$, $R_p$ being the outer radius of the light-sensitive surface of the photodiode.

3. A coupling device as claimed in Claim 1 or 2, characterized in that the distance a is selected as follows :

$$a = \frac{R_p - 1.5\,R_{kmax}}{\tan \alpha_{max}} \cdot \rho$$

wherein $R_{kmax}$ is the maximum core radius of an optical waveguide to be connected in accordance with the specifications of the measuring instrument and is a dimensionless factor in the range from $1 \geq p \geq 0.8$, and in that smallest diameter d of the aperture ranges from $7\,R_{kmax} \geq d \geq 2.5\,R_{kmax}$.

4. A coupling device as claimed in any one of the Claims 1 to 3, characterized in that the apex angle β of the conical aperture has a value in the range from $2.2\,\alpha_{max} \geq \beta \geq 2\,\alpha_{max}$.

5. A device as claimed in any one of the Claims 1 to 4, characterized in that the aperture cone extends over at least 40% of the distance a between the aperture plate at the location of its smallest diameter and the photodiode.

6. A device as claimed in any one of the Claims 1 to 5, characterized in that the measuring instrument is dimensioned for a value tan $\alpha_{max}$ = 0.3 – 0.35.

7. A device as claimed in any one of the Claims 1 to 6, characterized in that the distance a = 2.5 to 3 mm.

8. A device as claimed in anyone of the Claims 1 to 7, characterized in that the aperture plate is integrated in the measuring instrument.

9. A device as claimed in any one of the Claims 1 to 8, characterized in that the aperture plate forms part of a connector adaptor for connectorized optical waveguides.

10. A device as claimed in any one of the Claims 1 to 9, characterized in that the distance between the aperture plate and the end face of the optical waveguide is less than 10 μm.


## Revendications

1. Dispositif de couplage pour le guidage d'un faisceau lumineux émis par une extrémité d'un guide d'ondes lumineuses (1) sur la surface photosensible (5) d'une photodiode (4) d'un appareil de mesure, notamment un wattmètre optique (6) comportant un diaphragme absorbant correspondant à l'une des faces terminales du guide d'ondes lumineuses, diaphragme dont l'ouverture (7) s'élargit de façon conique vers la surface photosensible de la photodiode et qui présente à l'endroit le plus étroit situé vis-à-vis de la face terminale du guide d'ondes lumineuses un diamètre (d) qui est légèrement inférieur au diamètre de la surface de sortie de lumière du guide d'ondes lumineuses, caractérisé en ce que le faisceau lumineux est dirigé immédiatement sur la surface photosensible de la photodiode et que l'angle d'ouverture β de la surface intérieure conique du diaphragme est supérieur à 2 arc tan $\alpha_{max}$, tan $\alpha_{max}$ étant l'ouverture numérique admissible au maximum (NA) d'un guide d'ondes lumineuses à brancher pour l'appareil de mesure.

2. Dispositif de couplage selon la revendication 1, caractérisé en ce que la distance a comprise entre l'ouverture du diaphragme, mesurée à l'endroit du diamètre le plus petit d, et la surface de la couche photosensible de la photodiode est choisie dans la gamme $5 R_p \geq a \geq 1,7 R_p$, $R_p$ étant le rayon extérieur de la surface photosensible de la photodiode.

3. Dispositif de couplage selon la revendication 1 ou 2, caractérisé en ce que la distance a est choisie comme suit :

$$a = \frac{R_p - 1,5 R_{kmax}}{\tan \alpha_{max}} \cdot \xi$$

dans laquelle $R_{kmax}$ est le rayon de noyau maximal d'un guide d'ondes lumineuses à raccorder selon la spécification de l'appareil de mesure et $\xi$ un facteur sans dimension dans la gamme $1 \geq \xi \geq 0,8$, et en ce que le diamètre d dans la gamme $7 R_{kmax} \geq d \geq 2,5 R_{kmax}$.

4. Dispositif de couplage selon l'une des revendications 1 à 3, caractérisé en ce que l'angle de cône $\beta$ de l'ouverture du diaphragme présente une valeur située dans la gamme $2,2 \alpha_{max} \geq \beta \geq 2 \alpha_{max}$.

5. Dispositif selon l'une des revendications 1 à 4, caractérisé en ce que le cône du diaphragme s'étend sur au moins 40% de la distance a comprise entre l'ouverture minimale du diaphragme et la photodiode.

6. Dispositif selon l'une des revendications 1 à 5, caractérisé en ce que l'appareil de mesure est déterminé pour une valeur tan $\alpha_{max} = 0,3$ à $0,35$.

7. Dispositif selon l'une des revendications 1 à 6, caractérisé en ce que la distance a est de 2,5 à 3 mm.

8. Dispositif selon l'une des revendications 1 à 7, caractérisé en ce que le diaphragme est solidaire de l'appareil de mesure.

9. Dispositif selon l'une des revendications 1 à 8, caractérisé en ce que le diaphragme est solidaire d'un adaptateur de réception pour des guides d'ondes lumineuses introduits dans des contacts femelles.

10. Dispositif selon l'une des revendications 1 à 9, caractérisé en ce que la distance comprise entre le diaphragme et la face terminale du guide d'ondes lumineuses est inférieure à 10 µm.